# EUROPEAN PATENT SPECIFICATION

(11) **EP 1 912 545 B1**
(45) Date of publication and mention of the grant of the patent: **01.04.2009**
(21) Application number: 06766052.2
(22) Date of filing: 07.07.2006
(51) Int. Cl.: A47J 37/12

(54) **AN ELECTRIC COOKING APPLIANCE COMPRISING A REMOVABLE BOWL**
ELEKTRISCHE KOCHVORRICHTUNG MIT EINER ENTFERNBAREN SCHÜSSEL
APPAREIL DE CUISSON ELECTRIQUE COMPRENANT UN BOL AMOVIBLE

(30) Priority: 20.07.2005 EP 05106646
(43) Date of publication of application: 23.04.2008
(73) Proprietor: Koninklijke Philips Electronics N.V., 5621 BA Eindhoven (NL)
(72) Inventor: FRAIJ, Fred, NL-5656 AA Eindhoven (NL); VLOGMAN, Harmanus, G., NL-5656 AA Eindhoven (NL)
(74) Representative: Damen, Daniel Martijn
(86) International application number: PCT/IB2006/052312
(87) International publication number: WO 2007/010429

(56) References cited:
- WO-A-98/01064
- US-A1- 2001 019 054

## Description

The invention is related to an electric cooking appliance comprising a removable bowl and an infrared sensor directed towards the bowl in order to sense the temperature of the bowl when the bowl is present in the cooking appliance, and comprising heating means for heating said bowl, which heating means are located in a plane underneath the bowl, which is a substantial horizontal plane during operation of the cooking appliance.

The infrared sensor can sense the temperature of the bowl while it is located at a distance from the bowl. The electric current supply to the heating means can be switched off in case the sensed temperature rises above a predetermined value, and can be switched on again when the sensed temperature drops below that value. Thereby, the temperature of the contents of the bowl can be controlled, whereby the predetermined value can be selected by the operator of the cooking appliance.

Such electric cooking appliance is described in US-B-6414284. This publication discloses a deep fat fryer comprising a casing and a removable bowl that can be placed in the casing, whereby the bowl is surrounded by the casing. The casing is provided with an electric heating member, which heating member is located underneath the bowl when the bowl is present in the casing. The inner side of the lateral wall of the casing is provided with an infrared sensor to sense the temperature of the bowl. The infrared sensor is located at a distance of the removable bowl and is directed towards the lateral wall of the bowl. The infrared sensor is provided with processing means including an analog/digital converter for transmitting a digital signal to a micro controller in order to control the supply of electric current to the heating member. Thereby the temperature of the contents of the removable bowl can be adjusted according to a desired value.

In general, the electric cooking appliance is furthermore provided with a detector for detecting the presence of the bowl in the casing. Such safety device blocks the supply of electric current to the heating means in case the removable bowl is not present in the casing of the cooking appliance, in order to avoid overheating of the cooking appliance. The bowl can be removed from the casing, for example in order to clean the bowl.

A deep fat fryer comprising a safety device for detecting the presence of the removable bowl in the casing is for example described in US-A-5927181. The detector is located at the upper edge of the casing and is provided with an upwardly directed movable pin. In case the bowl is not present in the casing, the pin will be in its uppermost position, whereby the electric circuit for supplying current to the heating member of the cooking appliance is interrupted by means of a switch that is controlled by the detector. When the bowl is present in the casing, the lower side of the edge of the bowl is pressing the pin downwards, so that the presence of the bowl in the casing is detected. Thereby said switch is put in a position whereby electric current can be supplied to the heating member in the casing.

The presence of such safety device in a cooking appliance requires an additional member having a relative complicated structure. In particular a mechanical detector, as described above, has movable parts, which parts can stick or be clamped, so that a reliable operation of the detector is not always ensured.

An object of the invention is an electric cooking appliance comprising a removable bowl, and heating means for heating said bowl, and an infrared sensor, whereby the presence or absence of the bowl in the casing is detected without the presence of a separate detector for detecting said presence or absence.

Another object of the invention is to provide the cooking appliance with a detector for detecting the presence or absence of the removable bowl, whereby the detector does not have movable parts.

To accomplish with the object, the main sensing direction of the infrared sensor is positioned at an angle with respect to said substantial horizontal plane, according to the characterizing part of claim 1. Said angle is preferably more than 20°, more preferably more than 30°. The main sensing direction is the central line (central axis) of an observation area (sensing area) of the infrared sensor, which area diverges from the sensor towards the object to be sensed.

In such inclined position of the infrared sensor, the sensor is directed towards the bowl when the bowl is present in the casing, whereby the infrared sensor can sense the temperature of the bowl in order to control that temperature, whereby control means can switch off the electric current supply to the heating means in the casing when the sensed temperature rises above a certain value. In case the bowl is not present in the casing, and the main sensing direction of the infrared sensor would be positioned horizontally, then the temperature of the inner side of the opposite wall will be sensed, which wall may be heated by the heating means, and may have a similar rising temperature as the bowl would have during heating up. Then, the infrared sensor cannot sense the absence of the removable bowl in a reliable manner. In case the main sensing direction of the infrared sensor is positioned at an angle with respect to the horizontal plane, the infrared sensor will not be directed to the opposite wall of the casing, so that it will sense a certain temperature, different from the expected temperature of the bowl. Therefore, the infrared sensor is able to detect the absence of the bowl when the cooking appliance is switched on.

In a preferred embodiment, the infrared sensor is directed towards the heating means when the bowl is removed from the cooking appliance, in order to sense the temperature of the heating means in case the bowl is not present in the cooking appliance. Then, in case the bowl is not present in the casing, the infrared sensor will automatically sense the temperature of the heating means, which temperature will rise very fast to a high value after the heating means are switched on. Because the sensor will sense the high temperature, the control means will switch off the supply of electric current to the heating means, so that overheating of the cooking appliance is avoided.

In a preferred embodiment, the control means are programmed in such way that the heating means are switched off when the sensed temperature is increasing faster than a predetermined value. Thereby the control means can recognize the difference between the relative slow heating up of the bowl, and the much faster heating up of the heating means in case the bowl is not present. In case the bowl is not present, the control means can switch off the electric current until the operator of the cooking appliance switches on the cooking appliance again.

Preferably, warning means are present in order to give a warning signal in case the sensed temperature is increasing faster than said predetermined value, so that the operator of the cooking appliance will know that the cooking appliance has been switched on while the bowl was not present in the casing.

The heating means can be any means that can generate heat, and can transfer that heat to the bowl of the cooking appliance. The transfer of heat can take place by contact between the bowl and the heating means, but, in a preferred embodiment, the heating means are a heat radiation member like an electrical resistance, whereby the heat is transferred by radiation to the bowl.

Preferably, the heating means is a tubular heat radiation member. The tubular heating member can follow a spiral path or a zigzag path in said plane, or any other path, whereby a certain distance is present between neighbouring parts of the tubular heating member. The space between neighbouring parts of the tubular heating member can be seen from a direction perpendicular with respect to said plane in which the tubular heating member is located. However, when looking in a direction having a smaller angle with respect to said plane, said space will look smaller, while the full diameter of the tubular heating member is still visible, in particular where the tubular heating member is seen in a direction perpendicular to it longitudinal axis. Therefore, the observation area that is sensed by the sensor will contain relative more of the tubular heating member and less of the space between parts of the tubular heating member when the main sensing direction has a smaller angle with respect to the plane in which the tubular heating member is present. The main sensing direction (observation direction of the sensor) means the central line (central axis) of the observation area of the sensor.

The infrared radiation from the bowl is received by the remote infrared sensor through a window of the sensor, which window has to transmit the infrared radiation. The window has to be free from contamination, and in a preferred embodiment, contamination of the window is detected by the control means. Thereby, the control means are programmed in such way that the heating means are switched off when the sensed temperature is increasing slower than a predetermined value. The slow increase of the sensed temperature indicates that the window of the sensor is contaminated. Such programming of the control means in order to detect contamination of the window of the infrared sensor can be seen as a separate invention, which invention can also be applied independent from the application of the invention as set forth in the first claim of this patent application.

Preferably, warning means are present in order to give a warning signal in case the sensed temperature is increasing slower than said predetermined value, so that the operator of the cooking appliance will know that the window of the infrared sensor of the cooking appliance has to be cleaned.

In a preferred embodiment, the infrared sensor is directed inclined upwardly, so that the temperature of the environment is sensed when the bowl is removed from the cooking appliance. Thereby, a constant relative low temperature will be sensed after the cooking appliance is switched on, so that the cooking appliance can be switched off by the control means and a warning sign may be given. The inclined upward direction of the infrared sensor can in particular be used in case of heating by means of induction, whereby no heat is generated by the heating means when the bowl is not present in the casing.

In a preferred embodiment, the cooking appliance is a deep fat fryer. In such cooking appliance the temperature is relative high, and also because of the presence of heated fat, it is important that the functioning of the safety devices is reliable.

The invention is furthermore related to a method for detecting the presence of a removable bowl at an electric cooking appliance, which cooking appliance is provided with an infrared sensor directed towards the bowl in order to sense the temperature of the bowl when the bowl is present in the cooking appliance, and with heating means for heating said bowl, which heating means are located in a substantial horizontal plane underneath the bowl, whereby the temperature of the heating means, or the temperature of the environment is sensed by the infrared sensor in case the bowl is removed from the cooking appliance, according to the characterizing part of claim 9.

The invention will now be further elucidated by means of a description of two embodiments of a deep fat fryer comprising a removable bowl and a heating member and an infrared sensor for sensing the temperature of the bowl when the bowl is present in the cooking appliance. Thereby reference is made to the drawing comprising Figures which are only schematic representations, in which:
Fig. 1 is a sectional view of the first embodiment of a deep fat fryer;
Fig. 2 is a sectional view of the first embodiment whereby the bowl is removed;
Fig. 3 is a top view of the first embodiment shown in Fig. 2;
Fig. 4 is a sectional view of the second embodiment of a deep fat fryer; and
Fig. 5 is a sectional view of the second embodiment whereby the bowl is removed.

The diagrammatic Figures do not represent parts which are not relevant for understanding the invention. In both examples of an embodiment, the same reference numerals are used for similar parts.

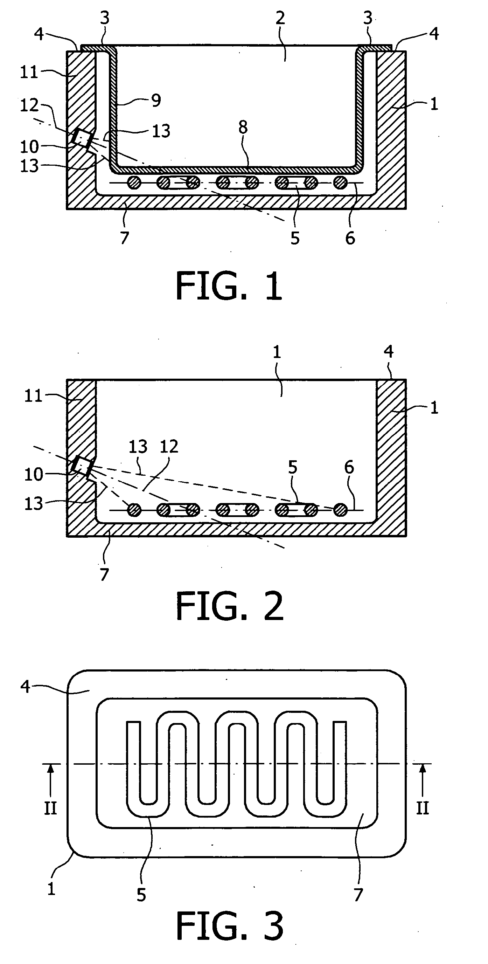

Fig. 1 shows a deep fat fryer comprising a casing 1, which casing encloses a space for receiving a removable bowl 2. The upper edge of the bowl 2 forms a flange 3, which flange 3 rests on the upper edge 4 of the casing 1. The casing 1 is provided with a heating member 5, which electric heating member 5 extends in a horizontal plane indicated with stripe/dot line 6. The heating member 5 comprises a tubular heating element following a zigzag path in said horizontal plane 6. The heating member 5 is fixed to the bottom 7 of the casing 1, and a metal radiation reflector may be present between the heating member 5 and the bottom 7 of the casing 1. The electric connectors for supplying electric current to the heating member 5 are not shown in the Figures.

The bowl 2 can be heated by the heating member 5, so that fat inside the bowl will be heated and can be used for cooking purposes. Thereby, the bottom wall 8 of the bowl 2 receives heat radiation from the heating member 5. In order to control the temperature of the fat, the outside of the lateral wall 9 of the bowl 2 is sensed by means of an infrared sensor 10, which sensor 10 is mounted in the vertical wall 11 of the casing 1. The infrared sensor 10 has a main sensing direction (observation direction), which direction is indicated with stripe/dot line 12. The main sensing direction 12 is the central line (central axis) of an observation area (sensing area) of the infrared sensor 10, which observation area is indicated with the two striped lines 13.

When the removable bowl 2 is present in the casing 1, as is shown in Fig. 1, the infrared sensor 10 measures the temperature of the bowl 2, because the outside of the lateral wall 9 of the bowl 2 is the only object in the observation area 13. The sensed temperature is transmitted to control means (not shown), which control means switches off the supply of electric current to the heating member 5 when the sensed temperature exceeds a predetermined value. When subsequently the sensed temperature is decreasing below that predetermined temperature, the control means will switch on again the supply of electric current to the heating member 5. Thereby the temperature of the fat in the bowl 2 is maintained at a temperature close to said predetermined value.

Fig. 2 shows the deep fat fryer, whereby the bowl 2 is not present in the casing 1. The main sensing direction 12 of the infrared sensor 10 is inclined with respect to the bottom 7 of the casing 1, so that the heating member 5 is present in the observation area 13 of the sensor 10. Therefore, the infrared sensor 10 will sense the rising temperature of the heating member 5 in case the heating member 5 is supplied with electric current while the bowl 2 is not present in the casing 1. In that case, the control means (not shown) will block the supply of electric current to the heating member 5 in order to avoid overheating of the deep fat fryer, whereby a warning signal is given to draw the attention of the operator of the fryer. The increase of the sensed temperature when the bowl 2 is not present is much faster than the increase of the temperature of the bowl 2 during normal operation, so that the control means can recognize the absence of the bowl 2.

Fig. 3 shows a top view of the deep fat fryer without the bowl 2, as it is represented in Fig. 2. The upper edge 4 of the casing is rectangular, but it can also be circular, or can have any appropriate shape. Thereby, Fig. 2 is a sectional view according to the arrows II in Fig. 3. Fig. 3 shows the zigzag path of the tubular heating element of the heating member 5.

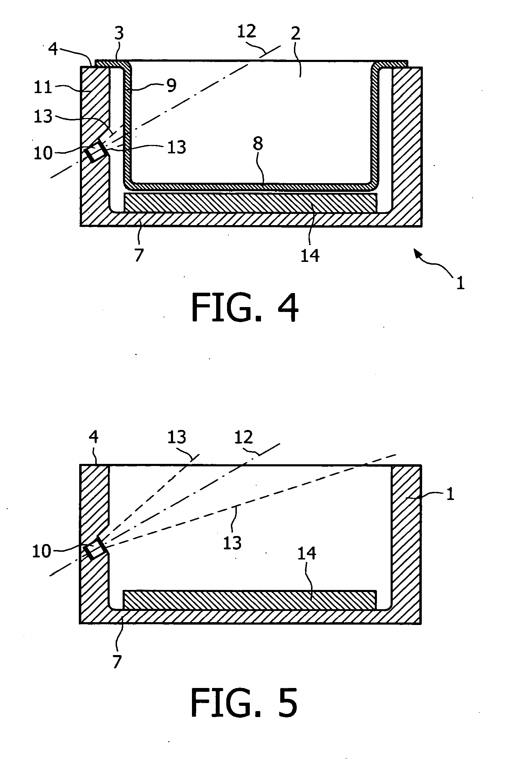

The second example of an embodiment is also a deep fat fryer, as is shown in Figs. 4 and 5, whereby the same reference numerals are used as in the Figs. 1, 2 and 3. However, the heating means is a induction heating member 14. Such induction heating member 14 generates heat in the bottom 8 of the bowl 2. There is no heat generation in the heating member 14 itself. In case the bowl 2 is not present, as is shown in Fig. 5, there will be no heat generation at all. Therefore, the absence of the bowl 2 can not be detected by means of the temperature of the heating member 14. Furthermore, the inside of the casing 2 may be warm because of an earlier cooking operation. Therefore, the main sensing direction 12 is inclined upwardly, so that the relative low environment temperature outside the casing is sensed, as is indicated by the striped lines 13. The detection of a low temperature, which temperature is not rising after switching on the fryer, can be recognized by the control means, so that a warning sign can be given and/or the fryer can be switched off.

The two embodiments of the deep fat fryer as described above are only examples of an electric cooking appliance according to the invention; many other embodiments are possible.

## Claims

1. An electric cooking appliance comprising a removable bowl (2) and an infrared sensor (10) directed towards the bowl (2) in order to sense the temperature of the bowl (2) when the bowl (2) is present in the cooking appliance, and comprising heating means (5;14) for heating said bowl (2), which heating means are located in a substantial horizontal plane underneath the bowl (2), **characterized in that** the main sensing direction (12) of the infrared sensor (10) is positioned at an angle with respect to said substantial horizontal plane, wherein the infrared sensor (10) is either directed towards the heating means (5) when the bowl (2) is removed from the cooking appliance, in order to sense the temperature of the heating means (5) in case the bowl (2) is not present in the cooking appliance or inclined upwardly when the bowl (2) is removed from the cooking appliance, so that the temperature of the environment is sensed in case the bowl (2) is not present in the cooking appliance.

2. An electric cooking appliance as claimed in claim 1, **characterized in that** said angle is more than 20°, preferably more than 30°.

3. An electric cooking appliance as claimed in any one of the preceding claims, **characterized by** control means being programmed in such way that the heating means (5) are switched off when the sensed temperature is increasing faster than a predetermined value.

4. An electric cooking appliance as claimed in claim3, **characterized by** warning means that can give a warning signal in case the sensed temperature is increasing faster than said predetermined value.

5. An electric cooking appliance as claimed in any one of the preceding claims, **characterized in that** the heating means is a tubular heat radiation member (5).

6. An electric cooking appliance as claimed in any one of the preceding claims, **characterized by** control means being programmed in such way that the heating means (14) are switched off when the sensed temperature is increasing slower than a predetermined value.

7. An electric cooking appliance as claimed in claim6, **characterized by** warning means that can give a warning signal in case the sensed temperature is increasing slower than said predetermined value.

8. An electric cooking appliance as claimed in any one of the preceding claims, **characterized in that** the cooking appliance is a deep fat fryer.

9. A method for detecting the presence of a removable bowl (2) at an electric cooking appliance, which cooking appliance is provided with an infrared sensor (10) directed towards the bowl (2) in order to sense the temperature of the bowl (2) when the bowl (2) is present in the cooking appliance, and with heating means (5) for heating said bowl (2), which heating means (5) are located in a substantial horizontal plane underneath the bowl (2), **characterized in that** the main sensing direction (12) of the infrared sensor (10) is positioned at an angle with respect to said substantial horizontal plane , wherein the infrared sensor (10) is either directed towards the heating means (5) in order to sense the temperature of the heating means (5)_in case the bowl (2) is not present in the cooking appliance, or inclined upwardly when the bowl (2) is removed from the cooking appliance, so that_the temperature of the environment is sensed by the infrared sensor (10) in case the bowl (2) is removed from the cooking appliance.

## Patentansprüche

1. Elektrische Kochvorrichtung mit einer entfernbaren Schüssel (2) und einem Infrarotsensor (10), der unmittelbar auf die Schüssel (2) gerichtet ist, um die Temperatur der Schüssel (2) abzutasten, wenn sich die Schüssel (2) in der Kochvorrichtung befindet, sowie mit Heizmitteln (5; 14), um die Schüssel (2) zu erhitzen, wobei die Heizmittel in einer im Wesentlichen horizontalen Ebene unterhalb der Schüssel (2) angeordnet sind, **dadurch gekennzeichnet, dass** die Hauptabtastrichtung (12) des Infrarotsensors (10) in einem Winkel zu der im Wesentlichen horizontalen Ebene positioniert ist, wobei der Infrarotsensor (10) entweder auf die Heizmittel (5) gerichtet ist, wenn die Schüssel (2) aus der Kochvorrichtung entfernt ist, um die Temperatur der Heizmittel (5) abzutasten, im Falle sich die Schüssel (2) nicht in der Kochvorrichtung befindet, oder nach oben geneigt ist, wenn die Schüssel (2) aus der Kochvorrichtung entfernt ist, so dass die Temperatur der Umgebung abgetastet wird, wenn sich die Schüssel (2) nicht in der Kochvorrichtung befindet.

2. Elektrische Kochvorrichtung nach Anspruch 1, **dadurch gekennzeichnet, dass** der Winkel mehr als 20°, vorzugsweise mehr als 30°, beträgt.

3. Elektrische Kochvorrichtung nach einem der vorangegangenen Ansprüche, **gekennzeichnet durch** Steuermittel, die so programmiert sind, dass die Heizmittel (5) abgeschaltet werden, wenn die abgetastete Temperatur schneller als um einen vorgegebenen Wert ansteigt.

4. Elektrische Kochvorrichtung nach Anspruch 3, **gekennzeichnet durch** Warnmittel, welche ein Warnsignal abgeben können, im Falle die abgetastete Temperatur schneller als um den vorgegebenen Wert ansteigt.

5. Elektrische Kochvorrichtung nach einem der vorangegangenen Ansprüche, **dadurch gekennzeichnet, dass** die Heizmittel ein röhrenförmiges Wärmestrahlungselement (5) sind.

6. Elektrische Kochvorrichtung nach einem der vorangegangenen Ansprüche, **gekennzeichnet durch** Steuermittel, die so programmiert sind, dass die Heizmittel (14) abgeschaltet werden, wenn die abgetastete Temperatur langsamer als um einen vorgegebenen Wert ansteigt.

7. Elektrische Kochvorrichtung nach Anspruch 6, **gekennzeichnet durch** Warnmittel, welche ein Warnsignal abgeben können, im Falle die abgetastete Temperatur langsamer als um den vorgegebenen Wert ansteigt.

8. Elektrische Kochvorrichtung nach einem der vorangegangenen Ansprüche, **dadurch gekennzeichnet, dass** die Kochvorrichtung eine Fritteuse ist.

9. Verfahren zum Detektieren des Vorhandenseins einer entfernbaren Schüssel (2) in einer elektrischen Kochvorrichtung, welche mit einem auf die Schüssel (2) gerichteten Infrarotsensor (10) zum Abtasten der Temperatur der Schüssel (2), wenn sich die Schüssel (2) in der Kochvorrichtung befindet, sowie mit Heizmitteln (5) zum Erhitzen der Schüssel (2) versehen ist, wobei die Heizmittel (5) in einer im Wesentlichen horizontalen Ebene unterhalb der Schüssel (2) angeordnet sind, **dadurch gekennzeichnet, dass** die Hauptabtastrichtung (12) des Infrarotsensors (10) in einem Winkel zu der im Wesentlichen horizontalen Ebene positioniert ist, wobei der Infrarotsensor (10) entweder auf die Heizmittel (5) gerichtet ist, um die Temperatur der Heizmittel (5) abzutasten, im Falle sich die Schüssel (2) nicht in der Kochvorrichtung befindet, oder nach oben geneigt ist, wenn die Schüssel (2) aus der Kochvorrichtung entfernt ist, so dass die Temperatur der Umgebung von dem Infrarotsensor (10) abgetastet wird, im Falle die Schüssel (2) aus der Kochvorrichtung entfernt ist.

## Revendications

1. Appareil électrique de cuisson comprenant une cuvette amovible (2) et un capteur infrarouge (10) qui est dirigé vers la cuvette (2) afin de détecter la température de la cuvette (2) lorsque la cuvette (2) est présente dans l'appareil de cuisson et qui comprend des moyens de chauffage (5 ; 14) pour chauffer ladite cuvette (2), lesquels moyens de chauffage se situent dans un plan horizontal substantiel au-dessous de la cuvette (2), **caractérisé en ce que** la direction principale de détection (12) du capteur infrarouge (10) est positionnée sous un angle par rapport audit plan horizontal substantiel dans lequel le capteur infrarouge (10) est ou bien dirigé vers les moyens de chauffage (5) lorsque la cuvette (2) est enlevée de l'appareil de cuisson afin de détecter la température des moyens de chauffage (5) dans le cas où la cuvette (2) ne serait pas présente dans l'appareil de cuisson ou bien est incliné vers le haut lorsque la cuvette (2) est enlevée de l'appareil de cuisson, de sorte que la température de l'environnement est détectée dans le cas où la cuvette (2) ne serait pas présente dans l'appareil de cuisson.

2. Appareil électrique de cuisson selon la revendication 1, **caractérisé en ce que** ledit angle est supérieur à 20°, de préférence supérieur à 30°.

3. Appareil électrique de cuisson selon l'une quelconque des revendications précédentes 1 à 2, **caractérisé par** des moyens de commande étant programmés de telle façon que les moyens de chauffage (5) soient mis hors circuit lorsque la température détectée est en cours d'augmenter plus rapidement qu'une valeur prédéterminée.

4. Appareil électrique de cuisson selon la revendication 3, **caractérisé par** des moyens d'avertissement qui peuvent donner un signal d'avertissement dans le cas où la température détectée est en cours d'augmenter plus rapidement que ladite valeur prédéterminée.

5. Appareil électrique de cuisson selon l'une quelconque des revendications précédentes 1 à 4, **caractérisé en ce que** les moyens de chauffage constituent un élément tubulaire de rayonnement de chaleur (5).

6. Appareil électrique de cuisson selon l'une quelconque des revendications précédentes 1 à 5, **caractérisé par** des moyens de commande étant programmés de telle façon que les moyens de chauffage (14) soient mis hors circuit lorsque la température détectée est en cours d'augmenter plus lentement qu'une valeur prédéterminée.

7. Appareil électrique de cuisson selon la revendication 6, **caractérisé par** des moyens d'avertissement qui peuvent donner un signal d'avertissement dans le cas où la température détectée serait en cours d'augmenter plus lentement que ladite valeur prédéterminée.

8. Appareil électrique de cuisson selon l'une quelconque des revendications précédentes 1 à 7, **caractérisé en ce que l**'appareil de cuisson est une friteuse.

9. Procédé de détection de la présence d'une cuvette amovible (2) dans un appareil électrique de cuisson, lequel appareil de cuisson est pourvu d'un capteur infrarouge (10) qui est dirigé vers la cuvette (2) afin de détecter la température de la cuvette (2) lorsque la cuvette (2) est présente dans l'appareil de cuisson et de moyens de chauffage (5) pour chauffer ladite cuvette (2), lesquels moyens de chauffage se situent dans un plan horizontal substantiel au-dessous de la cuvette (2), **caractérisé en ce que** la direction principale de détection (12) du capteur infrarouge (10) est positionnée sous un angle par rapport audit plan horizontal substantiel dans lequel le capteur infrarouge (10) est ou bien dirigé vers les moyens de chauffage (5) afin de détecter la température des moyens de chauffage (5) dans le cas où la cuvette (2) ne serait pas présente dans l'appareil de cuisson ou bien est incliné vers le haut lorsque la cuvette (2) est enlevée de l'appareil de cuisson, de sorte que la température de l'environnement est détectée par le capteur infrarouge (10) dans le cas où la cuvette (2) serait enlevée de l'appareil de cuisson.
